# EUROPÄISCHE PATENTANMELDUNG

(11) **EP 1 086 660 A2**
(43) Veröffentlichungstag der Anmeldung: **28.03.2001**
(21) Anmeldenummer: 00118136.1
(22) Anmeldetag: 29.08.2000
(51) Int. Cl.: A61C 5/06

(54) **Kartusche und Dentalapplikator**

(30) Priorität: 23.09.1999 DE 19945706
(71) Anmelder: IVOCLAR AG, 9494 Schaan (LI)
(72) Erfinder: Kunkel, Peter, 9495 Triesen (LI); Winkler, Siegbert, 6800 Tisis (AT); Hohenegger, Franz, 9490 Vaduz (LI)
(74) Vertreter: Baronetzky, Klaus, Dipl.-Ing.

(57) **Zusammenfassung**

Bei einer Kartusche für die Aufnahme von pastösem Material, insbesondere Dentalmaterial, mit einem Kartuschenkörper und mit einer Auslaßöffnung (20), ist es vorgesehen, daß die Achse der Auslaßöffnung sich schräg seitlich nach vorne wegerstreckt und in einem vorderen Bereich des Kartuschenkörpers (12) ausgebildet ist, und insbesondere die Breite der Auslaßöffnung (20) mindestens über einen Bereich nach vorne hin zunimmt.

## Beschreibung

Die Erfindung betrifft eine Kartusche gemäß dem Oberbegriff von Anspruch 1 sowie einen Dentalapplikator gemäß dem Oberbegriff von Anspruch 14, die für die Aufnahme von pastösem Material, insbesondere Dentalmaterial, bestimmt sind.

Eine derartige Kartusche ist beispielsweise aus der DE-C1 196 51 981 bekannt. Bei dieser Kartusche erstreckt sich eine Auslaßöffnung für das Dentalmaterial im vorderen Bereich der Kartusche, wobei der Auslaß bei dieser Ausgestaltung als Austreibstutzen ausgebildet ist, der sich schräg seitlich wegerstreckt. Der Austreibstutzen ist vergleichsweise lang und weist eine vergleichsweise beschränkte Querschnittsfläche auf, so daß sich ein entsprechender Strömungswiderstand für das den Austreibstutzen durchtretende Dentalmaterial einstellt. Dennoch hat sich diese Lösung gut bewährt, wenn es gilt, niedrigviskose Dentalmaterialien auszudrücken, die insbesondere auch vollständig ausgedrückt werden können, nachdem ein Austreibkörper in den Austreibstutzen eingeführt wird.

Ferner ist es bereits vorgeschlagen worden, einen recht kurzen Austreibstutzen zu verwenden. Diese Lösung ist strömungstechnisch vergleichbar mit der Ausführungsform gemäß Fig. 2 der DE-C1-196 51 981. Sie ermöglicht es, dem austretenden Strang Dentalmaterial eine lediglich etwas reduzierte Querschnittsfläche zu geben. Trotz der relativ geringen Reduktion ist der Strömungswiderstand jedoch recht groß, und zwar insbesondere bei den Lösungen, die auch eine seitliche Ablenkung viskoser Dentalmaterialstränge vorschlagen. Um derart viskose Dentalmaterialien wirksam seitlich umzulenken, müssen - so die bislang herrschende Meinung - erhebliche Scherkräfte überwunden und die Strömungsrichtung über eine gewisse Strömungslänge vorgegeben werden, um nach der Absenkung wieder eine einer laminaren Strömung angenäherte Strömung zu erhalten.

Zwar könnte man den Austreibstutzen in einem Bogen mit einem recht großen Radius nach außen ziehen, um insofern günstige Strömungsverhältnisse zu erhalten. Dies würde jedoch erhebliche Materialverluste bedeuten, wenn der Kolben dann in den recht großen Bogen nicht eintreten könnte, wie es bei der konventionellen Technik der Fall ist.

Zudem steht häufig nicht ausreichend Platz für eine derartige bogenförmige Ausgestaltung zur Verfügung. Insofern sind eher Kompromißlösungen vorgeschlagen worden, bei denen die seitliche Auslenkung nur in einem eher geringen Winkel zur Längsachse des Kartuschenkörpers verläuft. Die bekannten Lösungen erlauben demnach nicht in dem gewünschten Maße eine deutliche seitliche Ablenkung viskoser Dentalmaterialien trotz eines schlanken Aufbaus und damit leichtere Manövrierbarkeit der Kartusche, insbesondere der Kartuschenspitze.

Daher liegt der Erfindung die Aufgabe zugrunde, eine Kartusche für ziemlich viskose Materialien gemäß dem Oberbegriff von Anspruch 1 sowie einen Dentalapplikator gemäß dem Oberbegriff von Anspruch 14 zu schaffen, mit dem eine deutliche seitliche Ablenkung der auszudrückenden Materialien erzielt werden kann, auch wenn diese hochviskos sind, ohne daß die Ausdrückkräfte besonders hoch wären, wobei dennoch ein einfacher und preisgünstig herzustellender Aufbau der Kartusche oder des Dentalapplikators gewährleistet sein soll.

Diese Aufgabe wird erfindungsgemäß durch Anspruch 1 bzw. 14 gelöst. Vorteilhafte Weiterbildungen ergeben sich hier aus den Unteransprüchen.

Besonders günstig ist es, daß die erfindungsgemäße Auslaßöffnung in dem Kartuschenkörper selbst ausgebildet ist. Hierdurch wird zunächst erreicht, daß kein seitlich irgendwie bedeutsamer Vorsprung die Handhabung erschwert, so daß auch die Befüllung von den schlecht zugänglichen Kavitäten nicht eingeschränkt ist. Dennoch lassen sich überraschend auch tiefliegende Kavitäten ohne weiteres erreichen, und der seitliche Ablenkwinkel des Dentalmaterialstranges kann trotz des geringen Strömungswiderstands erheblich sein und beispielsweise auch an 90° heranreichen. Die im Zusammenhang mit der Erfindung vorgenommenen Versuche haben ergeben, daß gerade auch durch die mindestens in Teilbereichen nach vorne zunehmende Breite des Dentalmaterialstranges dieser dazu neigt, sich bogenförmig nach rückwärts zu krümmen, wobei auch die Gestaltung der Ablenkwand erfindungsgemäß besonders günstig eingesetzt werden kann.

Besonders günstig ist es, daß erfindungsgemäß die Stelle der eigentlichen Applikation, also des Aufbringens des Strangs an dem Applikationsort, von der Kartusche selbst entfernt angeordnet ist. Der Strang selbst dient damit praktisch als simulierter Auslaßstummel, wobei die Festigkeit des Strangs - abgesehen von der hohen Viskosität des Materials - im wesentlichen durch zwei Gesichtspunkte unterstützt Wird: Durch die asymmetrische Ausgestaltung der Ausgabeöffnung entsteht ein relativ breiter Strang, dessen Flanken nach der Art von Rippen aussteifend wirken. Darüber hinaus verleiht die sich durch das Ausdrücken ergebende Krümmung des Strangs diesem eine etwas verbesserte Festigkeit. Die Krümmung kann durch das Anbringen eines Innenradiusses oder einer Innenkrümmung an der der Auslaßöffnungswand gegenüberliegenden Ablenkwand unterstützt werden.

Es versteht sich, daß abgesehen von der bevorzugten Ausgestaltung mit von hinten nach vorne - betrachtet über die Kartuschenlänge - zunehmender Breite der Ausgabeöffnung nach Belieben weitere modifizierte Ausgabeöffnungen realisiert werden können. Beispielsweise läßt sich durch die Realisierung einer im wesentlichen rautenförmigen Ausgabeöffnung auch ein entsprechend gestalteter Strang mit einer recht hohen Biegefestigkeit erstellen.

Es versteht sich, daß der Umformwiderstand zunimmt, wenn die Stranggeometrie stärker von der Kreisform gemäß dem Kartuschenkörper abweicht. Erfindungsgemäß ist es andererseits besonders günstig, daß auch eine recht geringe Umformung möglich ist, um die erfindungsgemäßen Wirkungen zu erlangen, wobei dennoch der Strömungswiderstand für das hochviskose Material geringgehalten werden kann. Insbesondere ist es erfindungsgemäß bevorzugt, daß keine Strömungswiderstände wie Schwellen oder Absätze den Austritt des Dentalmaterials aus dem Kartuschenkörper beeinträchtigen, wobei es besonders bevorzugt ist, wenn sich die Ausgabeöffnung praktisch in unmittelbarer Verlängerung des bevorzugt im wesentlichen zylinderförmigen Kartuschenkörpers erstreckt, soweit die der Auslaßöffnung benachbarte Zylinderwand betroffen ist.

Aufgrund der strömungstechnisch ausgesprochen günstigen Ausgestaltung für die Erzeugung des erfindungsgemäßen Strangs ist auch eine Flächenreduktion im Verhältnis von beispielsweise 1 : 2,5 zwischen der Querschnittsfläche des Innenbereichs des Kartuschenkörpers und der Auslaßöffnung ohne die Erzeugung allzu großer Strömungswiderstände möglich.

Gemäß einem weiteren, besonders günstigen Gesichtspunkt ragt bei der erfindungsgemäßen Ausgestaltung der Kartusche kein Teil, das mit der Kartusche fest verbunden wäre, seitlich über den Kartuschenumfang hinaus. Vielmehr simuliert der erfindungsgemäße Strang einen entsprechend seitlich sich wegerstreckenden Auslaßstutzen. Dies bedeutet andererseits aber, daß die erfindungsgemäße Kartusche bei Bedarf ohne weiteres auch mit einer entsprechenden Abdeckkappe (50) verschließbar ist.

Weitere Vorteile, Einzelheiten und Merkmale ergeben sich aus der nachfolgenden Beschreibung eines Ausführungsbeispiels anhand der Zeichnung.

Es zeigen:
- Fig. 1: einen Schnitt durch eine Ausführungsform einer erfindungsgemäßen Kartusche;
- Fig. 2: einen Schnitt durch die Ausführungsform gemäß Fig. 1, wobei das Ausdrücken des viskosen Dentalmaterials dargestellt ist;
- Fig. 3: eine Vorderansicht der Ausführungsform gemäß Fig. 1 und 2;
- Fig. 4: eine Draufsicht auf eine modifizierte Ausführungsform der erfindungsgemäßen Kartusche; und
- Fig. 5: eine Schnittansicht der Ausführungsform gemäß Fig. 4; und
- Fig. 6: eine Seitansicht eines erfindungsgemäßen Dentalapplikators

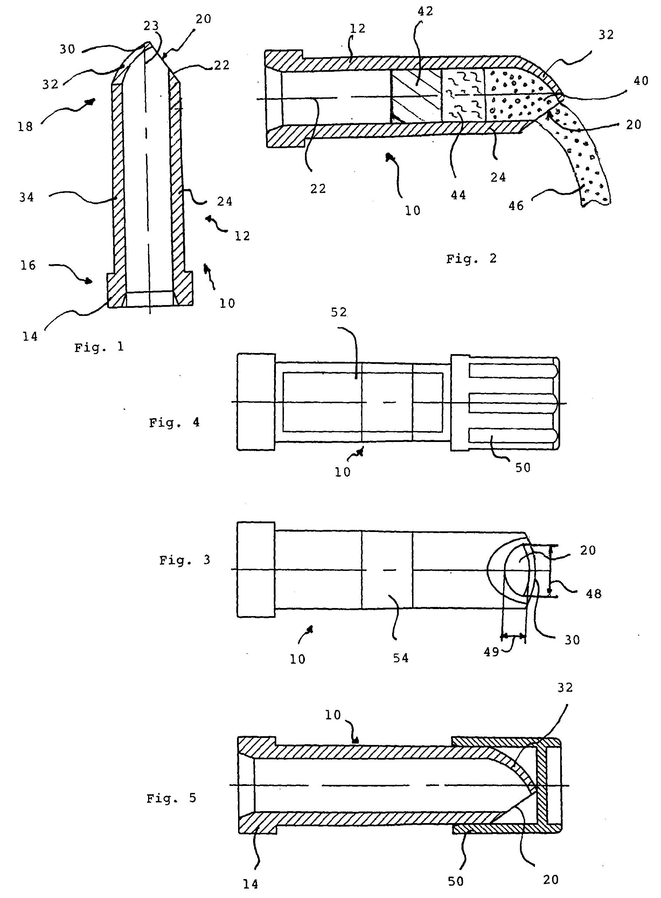

Die in Fig. 1 dargestellte Kartusche 10 weist einen Kartuschenkörper 12 auf, der im wesentlichen zylindrisch ist und sich für die Aufnahme eines pastösen Materials eignet. In der Kartusche 10 ist ein nicht dargestellter Kolben geführt, über den das pastöse Material ausdrückbar ist.

Zwar ist die vorliegende Erfindung schwerpunktmäßig für den Bereich von Dentalmaterialien vorgesehen. Es versteht sich jedoch, daß anstelledessen auch beliebige andere pastöse oder hochviskose Materialien verwendet werden können.

Für die Abstützung der eingeleiteten Druckkräfte beim Ausdrücken des Materials weist der Kartuschenkörper 12 einen Stützkragen 14 auf, der das rückwärtige Ende 16 kreisförmig umgibt.

Das vordere Ende 18 des Kartuschenkörpers 12 weist eine Auslaßöffnung 20 auf, über welche das Material den Kartuschenkörper 12 verlassen kann. Die Auslaßöffnung 20 ist im Kartuschenkörper 12 selbst ausgebildet, und zwar in einer Auslaßöffnungswand 22, die sich schräg zur Achse 23 des Kartuschenkörpers 12 erstreckt. Die Normale der Wandfläche 22 weist in dem dargestellten Ausführungsbeispiel in einem Winkel von 55° bezogen auf die Achse 23 nach vorne. Hinsichtlich einer Wand 24 des Kartuschenkörpers 12 ist die Auslaßöffnung 20 nach der Art eines schrägen Abschnitts ausgebildet, wobei die Schnittfläche nicht ganz bis zur Mitte des Körpers 12 reicht und an einer Spitze 30 des Körpers 12 endet.

Der Auslaßöffnung 20 gegenüberliegend und dieser zugeneigt ist eine Ablenkwand 32 ausgebildet, die sich von der der Wand 24 gegenüberliegenden Wand 34 des Kartuschenkörpers 12 ausgehend zur Achse 23 hin erstreckt und auf die Auslaßöffnungswand 22 trifft. Die Ablenkwand 32 ist bevorzugt gebogen, so daß die Strömungsrichtung des Strangs allmählich abgelenkt wird. In diesem Zusammenhang ist es günstig, wenn der Innenradius der Ablenkwand etwa dem Durchmesser des Kartuschenkörpers entspricht. In einer modifizierten Ausgestaltung ist es vorgesehen, daß der Radius von hinten nach vorne etwas zunimmt, so daß die Umlenkung des Strangs aus pastösem Material zunächst langsam und darm rascher erfolgt. Erfindungsgemäß besonders wesentlich ist hier jedenfalls ein stetiger Übergang ohne Stufen, Absätze oder dergleichen, so daß keine Strömungshindernisse aufgebaut werden.

Durch die zur Spitze hin konvergierende Ausgestaltung der Ablenkwand 32 entsteht für die Auslaßöffnung 20 eine Querschnittsverengung, so daß zugleich eine Düse gebildet wird. Die Querschnittsverengung erfolgt allmählich, so daß auch die Strömungsgeschwindigkeit nur allmählich zunimmt. Durch die Krümmung der Ablenkwand 32 an ihrer Innenseite erhält der austretende Strang die Tendenz, sich von der Auslaßöffnung 20 ausgehend ebenfalls gekrümmt zu erstrecken, wie es aus Fig. 2 ersichtlich ist.

In dem dargestelltem Ausführungsbeispiel ist zudem vorgesehen, daß die Ablenkwand 32 sich zur Spitze 20 des Kartuschenkörpers 12 hin noch etwas verjüngt und an der Spitze 30 eine deutlich geringere Wandstärke als die Wände 24 und 34 des Kartuschenkörpers 12 aufweist.

Die Auslaßöffnung 20 weist eine asymmetrische Ausgestaltung dahingehend auf, daß ihre Breite - wie es besser aus Fig. 3 ersichtlich ist - der Spitze 30 benachbart vergrößert ist. Die aus Fig. 3 ersichtliche asymmetisch-linsenförmige Ausgestaltung ergibt sich unmittelbar durch die Realisierung des Schnitts gemäß Fig. 1.

In Fig. 2 ist ersichtlich, in welcher Weise sich Dentalmaterial 40 aus der Kartusche 10 herausbewegen kann. In der Kartusche 10 ist im zylindrischen Kartuschenkörper 12 ein Kolben 42 geführt, der entlang der Achse 23 beweglich ist, und zwar bis zum Beginn der Ablenkwand 32. Der Kolben 42 besteht aus einem druckfesten Kunststoffmaterial und wird durch die eingeleiteten Druckkräfte nicht nennenswert verformt. An seinem vorderen Ende ist bei dem dargestellten Ausführungsbeispiel ein Verformkörper 44 ausgebildet, der beim Vorschieben des Kolbens 42 durch die Ablenkwand 32 verformt wird und bei entsprechender Bewegung des Kolbens 42 den gesamten Innenraum bis zur Auslaßöffnung 20 ausfüllt. Durch diese Ausgestaltung ist sichergestellt, daß kein Dentalmaterialrest in dem Kartuschenkörper 12 verbleibt. Zwar vermag bei vollständigem Ausdrücken das in dem Kartuschenkörper 12 vorhandene Dentalmaterial die Stützfunktion für den aus dem Kartuschenkörper 12 herausragenden Dentalmaterial-Strang 46 nicht mehr zu leisten. In der Regel sind dann allerdings auch die tiefliegenden Bereiche mit dem bereits ausgedrückten Dentalmaterial gefüllt, so daß dies insofern unkritisch ist.

Aus Fig. 2 ist ersichtlich, daß sich der Strang 46 schräg bogenförmig aus der Auslaßöffnung 20 heraus erstreckt. Die Startrichtung des Strangs 46 an der Auslaßöffnung 20 entspricht im wesentlichen der Winkelhalbierenden der der Auslaßöffnung benachbarten Innenendbereiche der Ablenkwand 32 und der Wand 24.

In einer modifizierten Ausgestaltung ist es demgegenüber vorgesehen, den Kolben 42 ohne Verformkörper 44 auszubilden. Diese Lösung eignet sich für die Bereitstellung des sich wegerstreckenden Strangs 46 auch darin, wenn der Ausdrückvorgang des Dentalmaterials 40 beendet ist.

Fig. 3 zeigt eine Seitenansicht der in Fig. 1 und 2 dargestellten Kartusche. Besonders gut ist die Form der Auslaßöffnung 20 ersichtlich. Deren Breite 48 nimmt zur Spitze 30 hin über einen wesentlichen Teil der Länge 49 der Auslaßöffnung 20 betrachtet zu, so daß ihre maximale Breite in der Nähe des spitzennahen Endes erreicht ist. Die axiale Länge 49 der Auslaßöffnung 20 ist deutlich geringer als, insbesondere etwa halb so groß wie, die Breite 48 der Auslaßöffnung 20. Die Ausgestaltung der Auslaßöffnung 20 ist dementsprechend im wesentlichen trapezförmig oder asymmetrisch-linsenförmig, wobei es sich versteht, daß beliebige andere Ausgestaltungen möglich sind, ohne den Bereich der Erfindung zu verlassen. Der austretende Strang 46 gemäß Fig. 2 nimmt genau die Form der Auslaßöffnung 20 an, so daß auch die Formgebung des Strangs 46 insofern an die Erfordernisse anpaßbar ist.

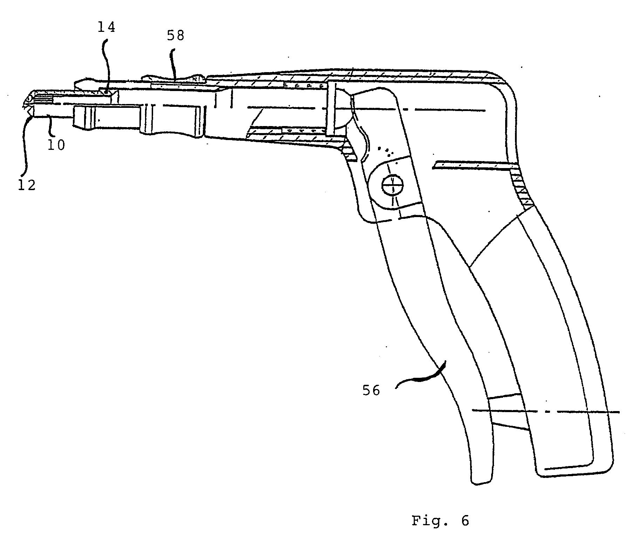

Aus den Fig. 4 und 5 ist eine modifizierte Ausgestaltung der erfindungsgemäßen Kartusche 10 ersichtlich, bei der eine Kappe 50 die Auslaßöffnung 20 abdeckt. Die Kappe 50 kann aufgesetzt werden, wenn die Kartusche 10 wiederverwendet werden soll, wobei günstig ist, daß eine einfache auf steckbare Kappe ein dichtes Abschließen erlaubt, nachdem ein Auslaßstummel oder - stutzen erfindungsgemäß entbehrlich ist. Die erfindungsgemäße Kartusche läßt sich in dieser Weise auch sicher verwahren, ohne daß bei der Handhabung zu befürchten wäre, daß die Kappe verlorengeht.

Auch wenn die vorliegende Erfindung anhand der bevorzugten Ausführungebeispiele unter Bezugnahme auf eine Kartusche beschrieben wurde, die in einen Kapselausdrücker einsetzbar ist, versteht es sich, daß anstelledessen auch ein beliebiger anderer geeigneter Dentalapplikator erfindungsgemäß ausgestattet sein kann.

Es versteht sich, daß es auch möglich ist, die Kartusche 10 mit einem Beschriftungsfeld 52 zu versehen, oder auch mit ggf. farbig gehaltenen Ringen 54, die eine Identifikation des jeweils darin befindlichen Dentalmaterials 40 ermöglichen.

Fig. 6 zeigt einen Dentalapplikator 56 unter Verwendung einer erfindungsgemäßen Kartusche. In dem dargestellten Ausführungsbeispiel ist ein im wesentlichen pistolenförmiger Dentalapplikator 56 mit einer Schiebemuffe 58 dargestellt, der die Kartusche 10 nach Wahl des Benutzers freigibt oder festhält, wobei es sich versteht, daß beliebige andere Dentalapplikatoren erfindungsgemäß ebenfalls eingesetzt werden können, auch solche, die nicht pistolenförmig sondern eher spritzenförmig ausgestaltet sind.

## Patentansprüche

1. Kartusche für die Aufnahme von pastösem Material, insbesondere Dentalmaterial (40), mit einem Kartuschenkörper (12) und mit einer Auslaßöffnung (20) für die Ausgabe des Materials, wobei die Achse der Auslaßöffnung (20) sich schräg seitlich nach vorne wegerstreckt, dadurch gekennzeichnet, daß die Auslaßöffnung (20) in einem vorderen Bereich des Kartuschenkörpers (12) selbst ausgebildet ist und insbesondere die Breite (48) der Auslaßöffnung (20) ungleich zu der, insbesondere größer als die, axiale Länge (49) der Auslaßöffnung (20) ist.

2. Kartusche nach Anspruch 1, dadurch gekennzeichnet, daß die Auslaßöffnung (20) in einer schrägen Wand vorne an dem Kartuschenkörper (12) ausgebildet ist und insbesondere mindestens, über ihre Länge (49) betrachtet, über einen Bereich nach vorne hin eine zunehmende Breite aufweist.

3. Kartusche nach einem der vorhergehenden Ansprüche, dadurch gekennzeichnet, daß der Kartuschenkörper (12) ein V-förmiges vorderes Ende (18) aufweist, dessen eine Wand die Auslaßöffnung (20) aufnimmt.

4. Kartusche nach einem der vorhergehenden Ansprüche, dadurch gekennzeichnet, daß der die Auslaßöffnung (20) aufnehmenden Wand eine Ablenkwand (32) gegenüberliegt, die insbesondere bogenförmig ausgestaltet ist und sich innen bis zur Auslaßöffnungswand (22) erstreckt.

5. Kartusche nach einem der vorhergehenden Ansprüche, dadurch gekennzeichnet, daß die Auslaßöffnung (20) im wesentlichen trapezförmig ausgebildet ist, wobei der längere Trapezschenkel der Spitze (30) oder dem vorderen Ende (18) des Kartuschenkörpers (12) zugewandt ist.

6. Kartuschenkörper (12) nach einem der vorhergehenden Ansprüche, dadurch gekennzeichnet, daß die Auslaßöffnung (20) abgeflacht linsenförmig ausgebildet ist, wobei die Abflachung dem vorderen Ende (18) des Kartuschenkörpers (12) zugewandt ist.

7. Kartusche nach einem der vorhergehenden Ansprüche, dadurch gekennzeichnet, daß die Auslaßöffnungswand (22) gegenüber der Längsachse (23) des Kartuschenkörpers (12) weniger geneigt als die ihr gegenüberliegende Ablenkwand (32) ist.

8. Kartusche nach einem der vorhergehenden Ansprüche, dadurch gekennzeichnet, daß die Auslaßöffnungswand (22) einen Winkel von 15° bis 50°, bevorzugt 30° bis 40° und insbesondere etwa 35° gegenüber der Längsachse der Kartusche (10) aufweist.

9. Kartusche nach einem der vorhergehenden Ansprüche, dadurch gekennzeichnet, daß die Auslaßöffnung (20) einen bedeutenden Teil, insbesondere mehr als 50° und bevorzugt mehr als 60° der Fläche der Auslaßöffnungswand (22) einnimmt.

10. Kartusche nach einem der vorhergehenden Ansprüche, dadurch gekennzeichnet, daß der der Seite der Auslaßöffnung (20) benachbarte Bereich der Wand (24) des Kartuschenkörpers (12) umlenkungsfrei in der Auslaßöffnung (20) mündet und daß die Ablenkwand (32) insbesondere bis etwas über die Mitte des Kartuschenkörpers (12) gezogen ist.

11. Kartusche nach einem der vorhergehenden Ansprüche, dadurch gekennzeichnet, daß die Querschnittsfläche der Auslaßöffnung (20) 20 % bis 60 %, bevorzugt 30 % bis 45 % und insbesondere knapp 40 % der Innenfläche des Kartuschenkörpers (12) entspricht.

12. Kartusche nach einem der vorhergehenden Ansprüche, dadurch gekennzeichnet, daß die Ablenkwand (32) sich innen in stetiger Fortsetzung der Kartuscheninnenwand nach vorne/seitlich erstreckt und frei von Strömungshindernissen ausgebildet ist.

13. Kartusche nach einem der vorhergehenden Ansprüche, dadurch gekennzeichnet, daß die Ablenkwand (32) einen Anschlag für die Bewegung eines in dem Kartuschenkörper (12) geführten Kolbens (42) bildet, der insbesondere einen verformbaren Austreibkörper (44) an seinem vorderen Ende (18) aufweist.

14. Dentalapplikator, mit einem Applikatorkörper, der eine Auslaßöffnung (20) in seinem vorderen Bereich aufweist und für das Ausdrücken von pastösem Material, insbesondere Dentalmaterial (40), geeignet ist, wobei die Achse der Auslaßöffnung (20) sich schräg seitlich wegerstreckt, dadurch gekennzeichnet, daß die Auslaßöffnung (20) in einem vorderen Bereich des Applikatorkörpers selbst ausgebildet ist und insbesondere die Breite (48) der Auslaßöffnung (20) ungleich zu der, insbesondere größer als die, axiale Länge (49) der Auslaßöffnung (20) ist.

15. Dentalapplikator nach Anspruch 14, dadurch gekennzeichnet, daß die Breite (48) der Auslaßöffnung (20) mindestens über einen Bereich nach vorne hin zunimmt.

16. Dentalapplikator nach Anspruch 14 oder 15, dadurch gekennzeichnet, daß die Auslaßöffnung (20) direkt in einer schrägen Auslaßöffnungswand (22) des Dentalapplikatorkörpers ausgebildet ist, welcher Wand eine Ablenkwand (32) für das pastöse Material gegenüberliegt.

17. Dentalapplikator nach einem der Ansprüche 14, 15 oder 16, gekennzeichnet durch die kennzeichnenden Merkmale eines der Ansprüche 4 bis 13.
